# EUROPÄISCHE PATENTSCHRIFT

(11) **EP 3 024 065 B1**
(45) Veröffentlichungstag und Bekanntmachung des Hinweises auf die Patenterteilung: **10.01.2018**
(21) Anmeldenummer: 14194477.7
(22) Anmeldetag: 24.11.2014
(51) Int. Cl.: H01M 2/22, H01M 2/30

(54) **Flexible Polanbindung an ein Batteriegehäuse sowie Verfahren**
Flexible pole connection for a battery casing and method
Raccordement de polarité flexible sur un boîtier de batterie ainsi que procédé

(43) Veröffentlichungstag der Anmeldung: 25.05.2016
(73) Patentinhaber: Samsung SDI Co., Ltd., Yongin-si, Gyeonggi-do (KR)
(72) Erfinder: Fauland, David, 8522 Groß St. Florian (AT)
(74) Vertreter: Gulde & Partner

(56) Entgegenhaltungen:
- EP-A1- 0 769 820
- DE-A1-102010 010 772
- US-A- 5 786 108

## Beschreibung

Die Erfindung geht aus von einer flexiblen Polanbindung an ein Batteriegehäuse sowie von einem Verfahren zur Herstellung der Polanbindung.

### Stand der Technik

Aus der Praxis sind Kraftfahrzeugbatterien mit einem Gehäuse und mit in einem Innenraum des Gehäuses positionierten Batteriezellen bekannt, wobei die elektrische Kontaktierung der Kraftfahrzeugbatterie von außen über elektrische Stromleiter und über Batterieanschlusspole erfolgt, an die der jeweilige elektrische Stromleiter elektrisch kontaktierend angeschlossen wird.

So offenbart die DE 102 26 479 C1 eine Kraftfahrzeugbatterie, bei welcher die Batterieanschlusspole als zylinderförmige Zapfen ausgeführt sind, an welche ein elektrischer Stromleiter über eine sogenannte Polklemme angeschlossen werden kann. Die Polklemme kann mithilfe einer Klemmschraube auf den jeweiligen Batterieanschlusspol aufgespannt werden.

Aus der der DE 102011050330 A1 ist bekannt, die Batterieanschlusspole als Flächenpole auszubilden, die in eine Wand des Gehäuse flächig eingebracht sind, wobei jeder der Flächenpole eine Ausnehmung mit einem Innengewinde aufweist, über welches ein Anschlusselement eines über den jeweiligen Batterieanschlusspol mit der Kraftfahrzeugbatterie elektrisch zu kontaktierenden elektrischen Stromleiters mit dem jeweiligen Flächenpol verschraubbar ist. Die Batterieanschlusspole sind als Flächenpole ausgebildet, die in eine Wand des Gehäuses der Kraftfahrzeugbatterie flächig eingebracht sind und gegenüber diese Wand nicht bzw. so gut wie nicht vorstehen.

Die US.A-5 786 108 offenbart eine Polanbindung an ein Batteriegehäuse einer galvanischen Zelle, die einen prismatischen Elektrodenplattenblock besitzt, bei dem die positiven und negativen Elektrodenplatten durch Separatoren getrennt und über Stromableiter mit den entsprechenden Polbolzen verbunden sind. Die Stromableiter der Elektrodenplatten sind an einem Ende drahtförmig und mit einem hülsenförmig ausgebildeten Teil der Polbolzen durch eine Pressverbindung verbunden und am anderen Ende abgeplattet und mit einem massefreien Streifen der Elektrodenplatten verbunden. Der Polbolzen ist von der Innenseite der Zelle durch den Zellendeckel geschoben.

Viele der bekannten Techniken wurden im Zusammenhang mit der Herstellung von Starterbatterien bekannt. Die Entwicklung von hybriden bzw. elektrischen Fahrzeugen macht die Verwendung von wesentlich größeren und aufwendig gestalteten Batterien notwendig. Sehr oft müssen die Gehäuseformen an den Einbauort im Kraftfahrzeug angepasst sein, wobei immer Platzprobleme auftreten.

Im Stand der Technik werden massive, zylindrische Polanbindungen in dem Deckel des Batteriegehäuses eingegossen und fixiert. Eine Kontaktierung mit einem elektrischen Leiter kann nur über eine manuelle Befestigung eines Kabelschuhs an der massiven Polanbindungen im Inneren des Gehäuses erfolgen. Aufgrund des mangelnden Platzes ist eine automatisierte Fertigung der Anbindung nicht möglich.

Es ist daher die Aufgabe der Erfindung eine flexible Polanbindung zu schaffen, die es erlaubt einen automatisierten Fügeprozess zu etablieren.

Die Aufgabe wird gelöst mit einer flexiblen Polanbindung an ein Batteriegehäuse gemäß den Merkmalen im Anspruch 1. Durch die zweiteiligen Anschlüsse und die Positionierung des zweiten Anschlussteils verdrehsicher im Gehäuse, ist die Polanbindung so ausgestaltet, dass ein automatisiertes Fügen der beiden Anschlussteile zu einer elektrisch leitenden Verbindung möglich ist.

Vorteilhafterweise besteht das zweite Anschlussteil aus einem Kabelschuh mit integrierter Mutter, so dass die Mutter nicht verloren gehen kann. Gerade für das automatisierte Zusammenfügen der Polanbindung ist es wichtig, nicht zu viele einzelne Bauteile und die Mutter verliersicher zu handhaben.

In einer alternativen Ausführungsform ist es von Vorteil, dass das zweite Anschlussteil aus einer metallischen Platte mit einer darin befestigten Mutter besteht.

Vorteilhafterweise Das erste Anschlussteil besteht aus einem Verdrehschutz und einer Polkappe, so dass auch die Montage in einem Gehäuseteil oder den Gehäusedeckel einfach erfolgen kann.

Nach der Montage im Gehäuse weist das erste Anschlussteil eine durchgängige Bohrung durch die Polkappe und den Verdrehschutz auf. Durch die Bohrung ist es auf einfache Art und Weise möglich das Gegenstück im Innern des Gehäuses zu kontaktieren.

In einer speziellen Ausgestaltung verjüngt sich die Bohrung, so dass eine Zentrierung der einzusetzenden Schraube erfolgen kann.

Dabei ist es von Vorteil, dass die Verjüngung im Verdrehschutz an die Form der Schraube eingepasst ist.

Die Montage wird dadurch vereinfacht, dass die Schraube in die Mutter eingreift und so die elektrische Verbindung herstellt.

Verwendet man eine Schraube mit einem nadelförmigen Gewindeschaftansatz wird die Zentrierung der Schraube in der Bohrung verbessert.

Verwendet man Kopfschrauben mit spezieller Kopfform müssen zwar spezielle Montagewerkzeuge eingesetzt werden, aber der Endverbraucher kann die Verbindung nicht lösen.

Vorteilhafterweise ist das Verfahren zur Herstellung einer flexiblen Polanbindung an ein Batteriegehäuse durch die einfache Verbindung des ersten und des zweiten Anschlussteils mit der Schraube außerhalb des Gehäuses geprägt. Dadurch lässt sich der Zusammenbau und die Herstellung der elektrischen Verbindung zwischen erstem und zweitem Anschlussteil in automatischen Verfahren realisieren. Darüberhinaus ist ein einfaches Lösen der Verbindung von außerhalb des Batteriesystems möglich. Die Batterie kann somit von außen stillgelegt werden, ohne dass ein Kurzschluss zu fürchten ist. Zum Stilllegen der Batterie muss das Gehäuse der Batterie nicht mehr geöffnet werden.

Dabei ist es von Vorteil, dass die elektrischen Verbindungsebenen der Anschlussteile parallel zueinander, aber senkrecht zum Batteriegehäuse liegen.

### Beschreibung der Erfindung

Die Erfindung wird nachfolgend beispielhaft unter Bezugnahme auf die beigefügte Zeichnung beschrieben.
Fig. 1 zeigt eine schematische Darstellung einer Batterie
Fig. 2 zeigt eine schematische Darstellung der beispielhaften Ausführungsform.

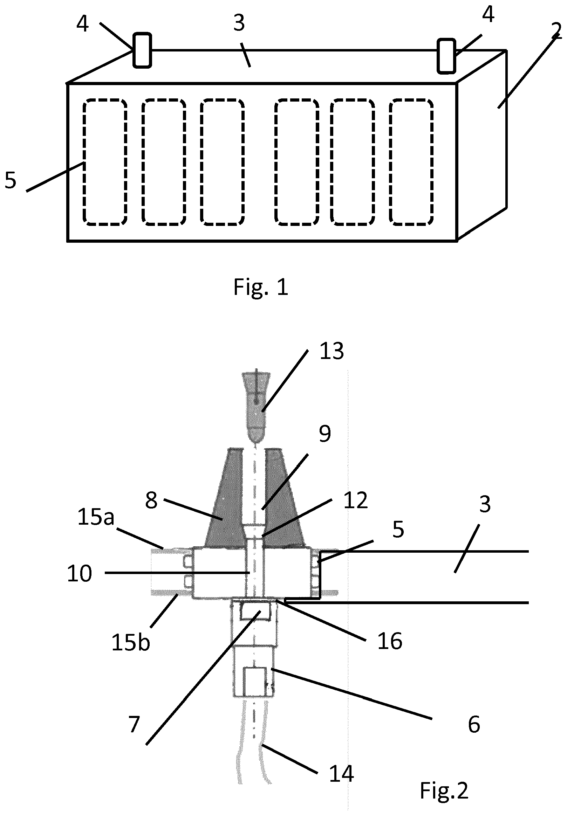

Figur 1 zeigt eine beispielhafte Ausführungsform einer Batterie, in der mehrere Batteriemodule 5 angeordnet sind. Diese Batteriemodule sind Lithiumionenzellen, die intern untereinander in Serie geschaltet und verbunden sind. Die internen Verbindungen sind in der Zeichnung nicht ausgeführt. Die Lithiumionenzellen 5 befinden sich in einem Gehäuseunterteil 2, das von einem Gehäusedeckel 3 verschlossen ist. Auf den Gehäusedeckel befinden sich Batteriepole 4. Die Positionierung der Batteriepole 4 auf dem Gehäusedeckel ist eine Ausführungsform. Mit der erfindungsgemäßen Lösung ist es durchaus auch möglich, die Batteriepole an den Wänden des Gehäuses 2 anzuordnen.

In Figur 2 ist die erfindungsgemäße Lösung eines flexiblen Polanschlusses ausgeführt. Das angedeutete Batteriegehäuse bzw. der Gehäusedeckel 3 weist eine Aussparung auf, in die ein zylinderförmiges Element mit angedeuteten Nasen 5 eingebracht ist. Das zylinderförmige Element mit den Nasen dient als Verdrehschutz im Gehäusedeckel 3 und als Verbindungsstück zur Polkappe 8. Auf den Verdrehschutz 3 ist die Polkappe 8 aufgebracht. Die Polkappe besteht aus einem konisch sich nach oben verjüngenden Bauteil, das zentral in seiner Mitte eine Bohrung 9 aufweist. Die Bohrung erstreckt sich entlang der Längsachse der Polkappe 8 und weist am Ende, das in Kontakt mit dem Verdrehschutz 5 ist, eine konische Aufnahme 12 auf. Auch der Verdrehschutz 5 besitzt eine zentrale Bohrung 10. An der Innenseite des Gehäusedeckels 3 befindet sich ebenfalls eine Aussparung 16, in die ein Kabelschuh 6 mit einer fest am Kabelschuh angebrachten Mutter 7 eingesteckt ist. Die Aussparung 16 dient dabei zur Vorjustierung des Kabelschuhs und zur verdrehsicheren Lagerung der Mutter 7 im Inneren des Gehäuses. Am Kabelschuh 6 ist der Kabelanschluss 14 angebracht, der zu der Sammelschiene der Lithiumionenzellen führt.

Die Vorbefestigung des Kabelschuhs oder einer in einer Metallzunge verpressten Mutter am Gehäuse oder Gehäusedeckel von innen kann dabei in jeder dem Fachmann geläufigen Form erfolgen.

Ein solcher Kabelschuh mit integrierter Mutter ist beispielsweise aus der EP1803192 B1 bekannt. Bei der Montage der Polanbindung wird der Kabelschuh mit seiner integrierten Mutter in die dafür vorgesehene Aussparung 16 im Gehäusedeckel 3 oder Gehäuse 2 eingesetzt. Anschließend kann die Batterie mit dem Gehäusedeckel 3 verschlossen werden. Eine Schraube 13 wird von außen durch die Polkappe 8 und den Verdrehschutz 5 geführt und greift mit ihrem Gewinde in die Mutter 7 ein. Durch die Ausgestaltung der Schraube, die einen nadelförmigen Gewindeschaftansatz besitzt, ist eine Selbstzentrierung möglich. Die Schraube wird in der Bohrung 9 der Polkappe geführt und liegt in der komischen Aufnahme 12 an, wenn das Gewinde festgezogen ist. Durch Verwendung einer speziellen Senkkopfschraube kann die Schraube nicht mit handelsüblichen Werkzeugen gelöst werden. Über die Schraube 13 ist die Polkappe 8 und den Kabelschuhe 6 mit den Batteriezellen verbunden.

Über flexible Kabel kann dann die Polkappe 8 kontaktiert werden. Durch die Erfindung ist es möglich die Batterie zu kontaktieren, ohne dass das Gehäuse geöffnet werden muss. Das Herstellen des Kontakts sowie das Lösen des Kontakts ist auf einfache Art und Weise mit Spezialwerkzeug möglich. Die Polanbindung kann dabei mit deutlich weniger Materialeinsatz hergestellt werden, so dass ein Gewicht gespart werden kann.

Die elektrische Ebene 15 a des ersten Anschlussteils liegt parallel zu elektrischen Ebene 15 b des zweiten Anschlussteils und ist mit der Dicke der Verdrehsicherung 5 beabstandet. Die Verdrehsicherung 5 ist als isolierendes Element und nicht leitend ausgestaltet. Die elektrischen Ebenen liegen dabei senkrecht zu der Verbindungsachse, die durch die Schraube, die Bohrungen und die Mutter vorgegeben ist.

In einer alternativen Ausführungsform befindet sich die Aussparung 16 nicht im Gehäusedeckel 3, sondern im Verdrehschutz 5. In einer solchen Ausführungsform wird zur Montage der Polverbindung zunächst der Verdrehschutz 5 in den Gehäusedeckel verpresst und in seiner vorgesehenen Aussparung 16 der Kabelschuhe 6 fixiert. Anschließend kann die Batterie mit dem Gehäusedeckel 3 verschlossen werden. Die Polkappe 8 wird dann auf den Verdrehschutz 5 aufgesetzt und der elektrische Anschluss über die Verschraubungen hergestellt.

### Bezugszeichenliste

1 Batteriemodul
2 Gehäuseunterteil
3 Gehäusedeckel
4 Batteriepol
5 Li-Ionen Zellen
6 Polschuh
7 Mutter
8 Polkappe
9 Bohrung Polkappe
10 Bohrung Gehäusedeckel
12 konische Aufnahme
13 Schraube
14 Kabelanschluss
15a, 15b elektrische Ebenen
16 Aussparung

## Patentansprüche

1. Flexible Polanbindung an ein Batteriegehäuse (2,3) mindestens bestehend aus einem Gehäuseunterteil (2) und einem Gehäusedeckel (3), das mindestens ein Batteriemodul (5) enthält und mindestens zwei elektrische Anschlüsse (4) aufweist, wobei die elektrischen Anschlüsse (4) jeweils ein erstes Anschlussteil (5,8) und ein zweites Anschlussteil (6,7) aufweisen, **dadurch gekennzeichnet, dass** das erste Anschlussteil aus einem Verdrehschutz (5) und einer Polkappe (8) besteht und eine durchgängige Bohrung (9, 10) durch die Polkappe (8) und den Verdrehschutz (5) zur Aufnahme einer Schraube (13) aufweist und das zweite Anschlussteil innerhalb des Gehäuses (2,3) verdrehsicher angebracht ist und eine Mutter (7) zum Zusammenwirken mit der Schraube (13) aufweist.

2. Flexible Polanbindung an ein Batteriegehäuse nach Anspruch 1, **dadurch gekennzeichnet, dass** das zweite Anschlussteil aus einem Kabelschuh (6) mit integrierter Mutter (7) besteht.

3. Flexible Polanbindung an ein Batteriegehäuse nach Anspruch 1, **dadurch gekennzeichnet, dass** das zweite Anschlussteil aus einer metallischen Platte mit einer darin befestigten Mutter (7) besteht.

4. Flexible Polanbindung an ein Batteriegehäuse nach Anspruch 1, **dadurch gekennzeichnet, dass** sich die durchgängige Bohrung (9,10) durch die Polkappe und den Verdrehschutz im Verdrehschutz verjüngt.

5. Flexible Polanbindung an ein Batteriegehäuse nach Anspruch 4 , **dadurch gekennzeichnet, dass** die Verjüngung (12) im Verdrehschutz an die Form einer Schraube (13) angepasst ist.

6. Flexible Polanbindung an ein Batteriegehäuse nach mindestens einem der voranstehenden Ansprüche , **dadurch gekennzeichnet, dass** die Schraube (13) in die Mutter (7) eingreift.

7. Flexible Polanbindung an ein Batteriegehäuse nach Anspruch 6, **dadurch gekennzeichnet, dass** die Schraube (13) einen nadelförmigen Gewindeschaftansatz aufweist.

8. Flexible Polanbindung an ein Batteriegehäuse nach Anspruch 6 oder 7, **dadurch gekennzeichnet, dass** die Schraube (13) eine Senkkopfschraube mit spezieller Kopfform ist.

9. Verfahren zur Herstellung einer flexiblen Polanbindung an ein Batteriegehäuse nach den Ansprüchen 1 bis 8 **dadurch gekennzeichnet, dass** das erste und das zweite Anschlussteil mit der Schraube (13) von außen verbunden wird.

10. Verfahren zur Herstellung einer flexiblen Polanbindung an ein Batteriegehäuse nach Anspruch 9, **dadurch gekennzeichnet, dass** die elektrischen Verbindungsebenen der Anschlussteile parallel zueinander, aber senkrecht zum Batteriegehäuse liegen.

## Claims

1. Flexible pole connection to a battery casing (2,3) at least consisting of a casing lower part (2) and a casing cover (3), which casing contains at least one battery module (5) and has at least two electrical connections (4), wherein the electrical connections (4) each have a first connection part (5,8) and a second connection part (6,7), **characterised in that** the first connection part consists of an antitwist protection (5) and a pole cap (8) and has a through-bore (9, 10) through the pole cap (8) and the antitwist protection (5) for receiving a screw (13) and the second connection part is mounted secured against twisting and has a nut (7) for cooperating with the screw (13).

2. Flexible pole connection to a battery casing according to claim 1, **characterised in that** the second connection part consists of a cable end (6) with integrated nut (7).

3. Flexible pole connection to a battery casing according to claim 1, **characterised in that** the second connection part consists of a metallic plate with a nut (7) secured therein.

4. Flexible pole connection to a battery casing according to claim 1, **characterised in that** the through-bore (9,10) through the pole cap and the antitwist protection tapers in the antitwist protection.

5. Flexible pole connection to a battery casing according to claim 4, **characterised in that** the taper (12) in the antitwist protection is adapted to the shape of a screw (13).

6. Flexible pole connection to a battery casing according to at least one of the preceding claims, **characterised in that** the screw (13) engages in the nut (7).

7. Flexible pole connection to a battery casing according to claim 6, **characterised in that** the screw (13) has a needle-shaped threaded shank extension.

8. Flexible pole connection to a battery casing according to claim 6 or 7, **characterised in that** the screw (13) is a countersunk head screw with special head shape.

9. Method for producing a flexible pole connection to a battery casing according to claims 1 to 8, **characterised in that** the first and the second connection part is connected to the screw (13) from the outside.

10. Method for producing a flexible pole connection to a battery casing according to claim 9, **characterised in that** the electrical connection planes of the connection parts lie parallel to one another, but perpendicular to the battery casing.

## Revendications

1. Raccordement de polarité flexible à un boîtier de batterie (2, 3) au moins constitué d'une partie inférieure de boîtier (2) et d'un couvercle de boîtier (3), qui contient au moins un module de batterie (5) et au moins deux connexions électriques (4), dans lequel les connexions électriques (4) comprennent chacune une première partie de connexion (5, 8) et une deuxième partie de connexion (6, 7), **caractérisé en ce que** la première partie de connexion est constituée d'une protection anti-torsion (5) et d'un capuchon polaire (8) et présente un trou débouchant (9, 10) traversant le capuchon polaire (8) et la protection anti-torsion (5) pour recevoir une vis (13), et la deuxième partie de connexion est montée bloquée en rotation à l'intérieur du boîtier (2, 3) et présente un écrou (7) destiné à coopérer avec la vis (13).

2. Raccordement de polarité flexible à un boîtier de batterie selon la revendication 1, **caractérisé en ce que** la deuxième partie de connexion est constituée d'une cosse de câble (6) dans laquelle est intégré un écrou (7).

3. Raccordement de polarité flexible à un boîtier de batterie selon la revendication 1, **caractérisé en ce que** la deuxième partie de connexion est constituée d'une plaque métallique dans laquelle est fixé un écrou (7).

4. Raccordement de polarité flexible à un boîtier de batterie selon la revendication 1, **caractérisé en ce que** le trou débouchant (9, 10) traversant le capuchon polaire et la protection anti-torsion se rétrécit dans la protection anti-torsion.

5. Raccordement de polarité flexible à un boîtier de batterie selon la revendication 4, **caractérisé en ce que** le rétrécissement (12) dans la protection anti-torsion est adapté à la forme d'une vis (13).

6. Raccordement de polarité flexible à un boîtier de batterie selon au moins l'une des revendications précédentes, **caractérisé en ce que** la vis (13) s'insère dans l'écrou (7).

7. Raccordement de polarité flexible à un boîtier de batterie selon la revendication 6, **caractérisé en ce que** la vis (13) comprend un embout de tige filetée en forme d'aiguille.

8. Raccordement de polarité flexible à un boîtier de batterie selon la revendication 6 ou 7, **caractérisé en ce que** la vis (13) est une vis à tête fraisée présentant une forme de tête spéciale.

9. Procédé de fabrication d'un raccordement de polarité flexible à un boîtier de batterie selon les revendications 1 à 8, **caractérisé en ce que** la première et la deuxième partie de connexion sont reliées à la vis (13) de l'extérieur.

10. Procédé de fabrication d'un raccordement de polarité flexible à un boîtier de batterie selon la revendication 9, **caractérisé en ce que** les plans de liaison électrique des parties de connexion se situent parallèlement l'un à l'autre, mais perpendiculairement au boîtier de batterie.
